(19) Europäisches Patentamt / European Patent Office / Office européen des brevets

(11) **EP 0 924 951 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(51) Int Cl.:
***H04Q 11/04*** *(2006.01)*

(21) Anmeldenummer: **98123377.8**

(22) Anmeldetag: **08.12.1998**

(54) **Übertragungssystem zur Übertragung von nx64-kb/s-Digitalsignalen mit an die Leitungseigenschaften adaptiv anpassbarem n über eine Teilnehmeranschlussleitung nach Massgabe von Messungen von Übertragungsparametern der Teilnehmeranschlussleitung**

Transmission system for the transmission of nx64-kb/s digital signals with n adaptable to line properties over a subscriber line according to measurements of transmission parameters of the subscriber line

Système de transmission pour la transmission des signaux digitaux de nx64-kb/s avec n adaptable aux proprietés de ligne, à travers une ligne d'abonné suivant des valeurs mesurées de transmission de la ligne d'abonné

(84) Benannte Vertragsstaaten:
**BE DE FR GR**

(30) Priorität: **22.12.1997 DE 19757368**

(43) Veröffentlichungstag der Anmeldung:
**23.06.1999 Patentblatt 1999/25**

(73) Patentinhaber: **SIEMENS AKTIENGESELLSCHAFT**
**80333 München (DE)**

(72) Erfinder: **Möhrmann, Karl Heinz**
**81369 München (DE)**

(56) Entgegenhaltungen:
**US-A- 5 023 869**

- **GREMMELMAIER ET AL: "AFRA - A NOVEL COST-EFFECTIVE WIDEBAND ACCESS OFFERING NEW COMMUNICATION OPPORTUNITIES" ISS '97. WORLD TELECOMMUNICATIONS CONGRESS. (INTERNATIONAL SWITCHIN SYMPOSIUM), GLOBAL NETWORK EVOLUTION: CONVERGENCE OR COLLISION? TORONTO, SEPT. 21 - 26, 1997, Bd. 1, 21. September 1997, Seiten 333-339, XP000720540 ABE S ET AL**

## EP 0 924 951 B1

**Beschreibung**

Im Teilnehmeranschlußbereich eines Telekommunikationsnetzes können für den Anschluß der einzelnen Teilnehmerstellen unterschiedliche Übertragungsmedien wie Cu-Zweidrahtleitung (ungeschirmte symmetrische Teilnehmer-Anschlußleitung), Koaxialkabel, Glasfaser oder auch Funk vorgesehen sein, wobei in bestehenden Telekommunikationsnetzen Cu-Doppelader-Leitungen eine beherrschende Rolle spielen. Der - Ende der 80er Jahre mit der Einführung des diensteintegrierenden digitalen Netzes (ISDN) mit einer Übertragungskapazität bis zu 160 kbit/s auf einer 6 km langen Cu-Doppelader-Leitung einsetzende - Trend zu höheren Übertragungsraten führt dabei ggf. zwar zu einer Heranführung von Glasfaserstrecken bis zu einem teilnehmernahen Schaltpunkt im Teilnehmeranschlußbereich, dem sog. Kabelverzweiger (Fiber to the Curb); im Verzweigerkabelbereich, d.h. für die restliche Strecke zwischen Kabelverzweiger und Teilnehmerstelle, verbleibt es in aller Regel jedoch bei der hier installierten ungeschirmten symmetrischen Cu-Doppelader-Leitung als Teilnehmer-Anschlußleitung. Die noch mit symmetrischen Cu-Zweidrahtleitungen zu überbrückende Distanz beträgt in Deutschland in 90 % aller Fälle weniger als 500 m; in den USA ist die entsprechende Distanz etwa 2- bis 3mal grösser.

Für die Übertragung digitaler Signale über ungeschirmte symmetrische Leitungen (Telefon-Teilnehmeranschlußleitungen) gibt es bereits unterschiedliche Systeme:

Schmalband-ISDN (N-ISDN) deckt im Zweidrahtbetrieb in jeder der beiden Übertragungsrichtungen mit zwei 64-kb/s-B-Kanälen und einem 16-kb/s-D-Kanal eine Datenrate von 144 kb/s ab.

Mit einem - zwei Zweidrahtleitungen benutzenden - HDSL(High Speed Digital Subscriber Line)-System ist in Vierdrahtbetrieb die Übertragung von 1,5 bzw. 2Mb/s über eine Entfernung von bis zu 4 km möglich.

In einem - nur eine Zweidrahtleitung benötigenden - ADSL(Asymmetric Digital Subscriber Line)-System können im Zweidrahtbetrieb bis zu 6 Mb/s in Richtung zum Teilnehmer hin und einige 100 kb/s in Richtung vom Teilnehmer weg über Entfernungen von einigen km übertragen werden (IEEE Communications Magazine, May 1994, pp. 102 - 109).

Mit VADSL (Very High Speed ADSL) sind unsymmetrische Systeme auch für höhere Datenraten in der Diskussion. Noch höhere Datenraten, insbesondere für ATM-Signale mit Datenraten bzw. Schnittstellen gemäß ATM-Forum-Standardvorschlägen, lassen sich - in Zwei- oder Vierdrahtbetrieb - mit VHDSL (Very High Speed Digital Subscriber Line, auch als VDSL bezeichnet) über kürzere Entferungen übertragen (ETSI TM3 Working Doc. No. 91, Vienna, 18. - 22.03.1996).

Die Notwendigkeit der Übertragung solcher höheren Datenraten ergibt sich aus dem Aufkommen neuer multimedialer Dienste, welche Bewegtbildübertragung mit einschließen, sowie aus der Notwendigkeit, LANs mit erheblichen Summendatenraten miteinander zu verbinden. Mit der wachsenden Nutzung des Internet ist ebenfalls ein rasches Ansteigen der Datenraten in den Netzen verbunden.

Für eine hochwertige Bewegtbildübertragung mit einer Qualität entsprechend einem PAL-Signal werden bei Anwendung des derzeitigen MPEG2-Standards zur Datenkompression ca. 4 Mb/s benötigt; eine VHS-ähnliche Qualität läßt sich mit etwa 1,5 bis 2 Mb/s erzielen. Solche hohen Datenraten lassen sich heute im Teilnehmeranschlußnetz zwar technisch beherrschen; der dazu notwendige Aufwand und die erforderlichen Investitionen zur Hochrüstung des Netzes sind aber erheblich.

Eine potentiell wesentlich kostengünstigere Möglichkeit eröffnet sich, wenn es gelingt, neue multimediale Dienste mit erheblich niedrigeren Datenraten von nx64kb/s (mit n ≤ 30) bidirektional über vorhandene Zweidrahtleitungen zu realisieren. Der demnächst zu erwartende Video-Kompressionsstandard H.263 führt zu ermutigenden Ergebnissen, welche erwarten lassen, daß eine auch für komplexe Bewegtbildsequenzen qualitativ gute Bewegtbildcodierung bei n ≈ 6 ... 18 möglich ist. In den nächsten Jahren sind zudem weitere Verbesserungen bei der Datenkompression für Bewegtbilder zu erwarten. Zugleich erlaubt eine derart niedrige Datenrate die Überbrückung einer erheblichen Entfernung und damit den Anschluß der überwiegenden Anzahl der Teilnehmer an die nächste Ortsvermittlungsstelle ohne die Notwendigkeit einer Verlegung neuer Leitungen, so dass insoweit keine wesentlichen Investitionen in neue Teilnehmer-Anschlußnetze erforderlich werden. Damit weist die Verwendung von nx64kb/s eine hohe Attraktivität auf; damit, dass die Kosten für eine Multimedia-Übertragung mit nx64kb/s in einer überschaubaren Relation zu den Kosten der konventionellen Telefonieübertragung stehen, würde auch die Tarifierung erleichtert werden.

Generell gilt: Je länger die Leitung, desto geringer ist die nutzbare Übertragungs-Bandbreite, wobei die benötigte Bandbreite mit einem entsprechend aufwendigen Übertragungsverfahren klein gehalten werden kann. Die Eigenschaften der Leitungen streuen allerdings in Abhängigkeit von Länge, Aderndurchmesser, Nebensprechen, Einstreuungen usw. merklich. Zur möglichst optimalen Ausnutzung der Leitungen ist es in diesem Zusammenhang bekannt (DE 196 25 385 A1), die jeweils über eine Teilnehmeranschlußleitung maximal übertragene Datenrate adaptiv an die Leitungseigenschaften anzupassen, indem Übertragungsparameter der Teilnehmeranschlußleitung gemessen werden und nach Maßgabe der Messergebnisse die maximal zugelassene Bitrate und ggf. das Übertragungsverfahren eingestellt werden; ein solches System ist unter dem Namen AFRA (Adaptive Fractional primary Rate Access) bekannt (ISS'97, XVI World Telecom Congress Proceedings, 333-339). Die Anpassung kann einmalig, z.B. bei Inbetriebnahme der Strecke oder während der Hochlaufphase des Systems, in gewissen Abständen wiederholt oder auch laufend während des Betriebs stattfinden. Eine solche Lösung ermöglicht eine leitungsindividuell optimale Nutzung der jeweiligen Leitung. Dabei stellt sich ggf. das Problem der Ermöglichung einer solchen Messung von Übertragungsparametern der Teilnehmeranschlußleitung im laufenden Betrieb ohne Störung der Informationsübertragung, und die Erfindung zeigt hierfür einen Lösungsweg.

Die Erfindung betrifft ein Übertragungssystem zur Übertragung von n×64-kb/s-Digitalsignalen mit an die Leitungseigenschaften adaptiv anpassbarem n (mit 2 ≤ n ≤ 30) über eine Teilnehmeranschlußleitung nach Maßgabe von Messungen von Übertragungsparametern der Teilnehmeranschlußleitung; dieses Übertragungssystem ist erfindungsgemäß dadurch gekennzeichnet, dass in die Folge der Digitalsignal-Pulsrahmen wiederholt ein Messintervall zur Messung der Übertragungsparameter eingeblendet ist und die in diesem Zeitraum an sich zu übertragenden Digitalsignal-Bytes zwischengespeichert und in einem Stopfverfahren ausserhalb dieses Zeitraums übertragen werden.

Dabei kann in weiterer Ausgestaltung der Erfindung in den Digitalsignal-Pulsrahmen jeweils wenigstens ein reserviertes Bytefeld zur Übertragung zwischengespeicherter Digitalsignal-Bytes vorgesehen sein, wobei die Anzahl der Bytefelder in den Digitalsignal-Pulsrahmen bei unveränderter Pulsrahmendauer jeweils um die Anzahl der reservierten Bytefelder vergrössert sein kann.

Des weiteren kann das Übertragungssystem gemäß der Erfindung in der Weise ausgestaltet sein,

dass in den einem Messintervall vorangehenden Pulsrahmen das Digitalsignal zwischen einem sendeseitigen, vom zu übertragenden Digitalsignal durchlaufenen Speicher mit einer dem Messintervall entsprechenden Speicherkapazität, in den das zu übertragende Digitalsignal mit seiner Nenn-Bitrate entsprechend n×64 kb/s eingelesen wird, und einem empfangsseitigen, vom übertragenen Digitalsignal durchlaufenen Speicher mit einer dem Messintervall entsprechenden Speicherkapazität, aus dem das übertragene Digitalsignal mit seiner Nenn-Bitrate entsprechend n×64 kb/s ausgelesen wird, mit demgegenüber erhöhter Übertragungsbitrate übertragen wird, wobei der zuvor gefüllte sendeseitige Speicher sich leert und der zuvor geleerte empfangsseitige Speicher sich füllt,

und dass im Messintervall die Digitalsignalübertragung zwischen sendeseitigem Speicher und empfangsseitigen Speicher unterbrochen ist, wobei der geleerte sendeseitige Speicher sich wieder füllt und der gefüllte empfangsseitige Speicher sich wieder leert.

Die Erfindung ermöglicht vorteilhafterweise eine zeitliche Integration von Digitalsignalübertragung über die Teilnehmeranschlußleitung und Messung von Übertragungsparametern der Teilnehmeranschlußleitung in einer entsprechenden Rahmenstruktur, innerhalb derer sowohl eine einmalige Einstellung von n während der Hochlaufphase des Systems als auch eine laufende adaptive Überwachung und Nachstellung von n auch während bestehender Verbindungen möglich ist.

Weitere Besonderheiten der Erfindung werden aus der nachfolgenden näheren Erläuterung der Erfindung an Hand der Zeichnungen ersichtlich. Dabei zeigt

FIG 1    schematisch einen Ausschnitt aus einem Teilnehmeranschlußnetz;

FIG 2    zeigt die Übertragungsrahmenstruktur eines ISDN-Basisanschlusses gemäß ITU-T Recommendation G.961 und ETSI Technical Report 080, und in

FIG 3    ist ein Beispiel der Rahmenstruktur eines AFRA(Adaptive Fractional primary Rate Access)-Systems skizziert.

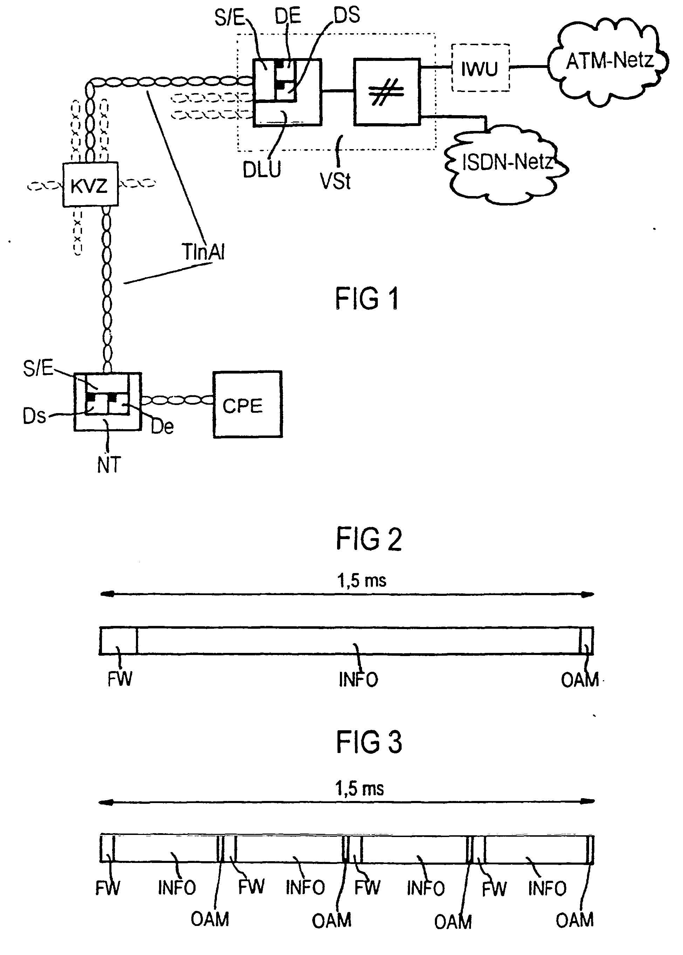

In der Zeichnung FIG 1 ist schematisch ein Ausschnitt aus einem Teilnehmeranschlußnetz skizziert, in dem eine Mehrzahl von dezentralen (teilnehmerseitigen) Leitungsabschußeinrichtungen (Network Terminations) NT jeweils über eine symmetrische Zweidraht-Teilnehmeranschlußleitung TlnAl mit einer demgegenüber zentralen Anschlußeinrichtung DLU verbunden ist. Dezentrale Leitungsabschlusseinrichtung NT und zentrale Anschlusseinrichtung DLU sind dabei jeweils mit einer Sende-/Empfangeinrichtung S/E mit einem sendeseitig vorgeschalteten Durchlaufspeicher Ds bzw. DS und einem empfangsseitig nachgeschalteten Durchlaufspeicher De bzw. DE an die symmetrische Zweidraht-Teilnehmeranschlußleitung TlnAl angeschlossen. Die zentrale Anschlußeinrichtung DLU kann beispielweise die sog. Digital Line Unit einer Vermittlungsstelle VSt sein, die ihrerseits Zugang zu einem ISDN-Netz und - über eine sog. Interworking Unit IWU - zu einem ATM-Netz haben möge. An die dezentralen Leitungsabschlußeinrichtungen NT mögen teilnehmerseitige Endgeräte wie zum Beispiel Telefon, Set Top Box mit Fernsehgerät, PC angeschlossen sein, die in FIG 1 pauschal mit einem Schaltungsblock CPE (Customer Premises Equipment) angedeutet sind. An die symmetrische Zweidraht-Teilnehmeranschlußleitung TlnAl Über die symmetrischen Zweidraht-Teilnehmeranschlußleitungen TlnAl mögen bidirektional Digitalsignale mit Bitraten von nx64 kb/s (mit 2 ≤ n ≤ 30) übertragbar sein, wobei n adaptiv an die Leitungseigenschaften der Teilnehmeranschlußleitung anpassbar sein möge.

Es sei besonders bemerkt, dass, wenn in der vorliegenden Beschreibung und in den Patentansprüchen von einem 64-kb/s-Digitalsignal gesprochen wird, dies ggf. nur eine schlagwortartig verkürzte Ausdrucksweise darstellt, da sich zu der Bitrate von n×64 kb/s noch die D-Kanal-Bitrate sowie diejenige Bitrate hinzuaddieren, die Rahmenkennwörter und OAM-Bits mit sich bringen.

Die Digitalsignalübertragung auf den Zweidraht-Teilnehmeranschlußleitungen TlnAl kann z.B. auf einer AFRA (Adaptive Fractional primary Rate Access)-Pulsrahmenstruktur basieren, wie sie in FIG 3 skizziert ist. Bevor FIG 3 näher betrachtet wird, soll aber zunächst ein Blick auf FIG 2 geworfen werden.

FIG 2 zeigt die Übertragungsrahmenstruktur eines ISDN-Basisanschlusses gemäß ITU-T Recommendation G.961 und ETSI Technical Report 080, wie sie in ISS'97, XVI World Telecom Congress Proceedings, 333-339, Figure 4 oben, dargestellt ist. Der ISDN-Basisrahmen hat eine Länge 1,5 ms und umfasst ein 18-bit-Rahmenkennwort FW, ein in 24 B-Felder ä 8 bit und 12 D-Felder ä 2 bit strukturiertes 216-bit-Informationsfeld INFO für zwei 64-kb/s-B-Kanäle und einen 16-kb/s-D-Kanal und ein 6-bit-Feld OAM eines sog. CL-Kanals für Operation and Maintenance. Ohne dass dies in FIG 2 noch dargestellt ist, ist der somit $18 + (8+8+2) \cdot \dfrac{1,5\,\mathrm{ms}}{125\,\mu\mathrm{s}} + 6 = 240\ \mathrm{bit}$ enthaltende Basisrahmen in einen 8 solche Basisrahmen umfassenden Multirahmen eingebettet, so dass die Bits des CL-Kanals über mehr als einen Basisrahmen verteilt sind. Der Beginn des Multirahmens wird dabei durch ein invertiertes Rahmenkennwort angezeigt.

Gemäß dem in FIG 3 dargestellten Beispiel bilden in einem AFRA(Adaptive Fractional primary Rate Access)-System bei n = 8, d.h. bei einer Digitalsignalübertragung mit einer Bitrate von 8×64 kb/s, vier 240-bit-Basisrahmen der in FIG 2 skizzierten Struktur einen Superrahmen, der - unabhängig von der Bitrate - eine Dauer von 1,5 ms aufweist und im Beispiel somit 960 bit enthält. Ohne dass dies in FIG 3 dargestellt ist, ist auch hier der Basisrahmen in den schon genannten, 8 Basisrahmen - und damit im Beispiel 2 Superrahmen - umfassenden Multirahmen eingebettet. Der Beginn des Multirahmens kann wiederum durch das invertierte Rahmenkennwort angezeigt werden; der Beginn des Superrahmens kann durch ein oder mehrere freie Bits im OAM-Teil des Multirahmens in Verbindung mit dem invertierten Rahmenkennwort (Multirahmen-Startwort) angezeigt werden.

In die Folge der Digitalsignal-Pulsrahmen wird nun wiederholt ein Messintervall zur Messung der Übertragungsparameter eingeblendet; die in diesem Zeitraum an sich zu übertragenden Digitalsignal-Bytes werden zwischengespeichert und in einem Stopfverfahren ausserhalb dieses Zeitraums übertragen. Dazu kann in den Digitalsignal-Pulsrahmen jeweils wenigstens ein reserviertes Bytefeld zur Übertragung solcher zwischengespeicherter Digitalsignal-Bytes vorgesehen sein, um das die Digitalsignal-Pulsrahmen ggf. auch jeweils verlängert sein können. Als Messintervall kann beispielsweise von Zeit zu Zeit ein ISDN-Multirahmen dienen, was den Vorteil mit sich bringt, dass die in einem solchen Multirahmen gegebene Reihenfolge von Bits unterschiedlicher Bedeutung ungestört bleibt. Der Multirahmen umfasst, wie schon gesagt, 8 Basisrahmen (vgl. FIG 2) und insoweit also 8×240 = 1920 bit, von denen dann 8×216 = 1728 bit = 216 Bytes das eigentliche n×64-kb/s-Digitalsignal (einschliesslich D-Bits) darstellen; diese 216 Bytes sind in einem Stopfverfahren ausserhalb des Messintervalls zu übertragen. Dazu kann der Basisrahmen (vgl. FIG 2) in seinem Informationsfeld um zwei B-Bytefelder und ein D-Bytefeld verlängert sein, d.h. um 2×8 + 2 = 18 bit, so dass das Informationsfeld dann 216 + 18 = 234 bit umfasst. 96 Basisrahmen (= 24 Superrahmen = 12 Multirahmen) verfügen damit über eine zusätzliche Informationskapazität von 96×18 = 1728 bit, die es ermöglicht, die während des Messintervalls an sich zu übertragenden, aber zwischengespeicherten Digitalsignal-Bytes übertragen. Die Messintervalle können sich dann im Abstand von 13 Multirahmen oder, allgemein gesprochen, mit einer Periode wiederholen, die gleich dem um eine Messintervall-Länge erhöhten Quotienten aus der Länge der während eines Messintervalls auftretenden Digitalsignal-Bytes und der Länge der in einem Digitalsignal-Pulsrahmen reservierten Bytefelder ist.

In den einem Messintervall vorangehenden Pulsrahmen kann dann das zu übertragende Digitalsignal einen sendeseitigen Speicher, zum Beispiel den Durchlaufspeicher Ds (in FIG 1), mit einer dem Messintervall entsprechenden Speicherkapazität durchlaufen, in den das zu übertragende Digitalsignal mit seiner Nenn-Bitrate entsprechend n×64 kb/s eingelesen wird, und es kann das übertragene Digitalsignal einen empfangsseitigen Speicher, im Beispiel den Durchlaufspeicher DE (in FIG 1), mit einer dem Messintervall entsprechenden Speicherkapazität durchlaufen, aus dem das übertragene Digitalsignal mit seiner Nenn-Bitrate entsprechend n×64 kb/s in Rahmen von 240 bit (vgl. FIG 2 und 3) ausgelesen wird.

Im Messintervall ist die Digitalsignalübertragung zwischen sendeseitigem Speicher (Ds) und empfangsseitigem Speicher (DE) unterbrochen, wobei der sendeseitige Speicher sich füllt.

Ausserhalb des Messintervalls wird das Digitalsignal zwischen dem sendeseitigen Speicher (Ds) und dem empfangsseitigen Speicher (DE) mit einer der genannten zusätzlichen Informationskapazität entsprechend - im Beispiel um den Faktor 258/240 = 1,075 - erhöhten Übertragungsbitrate übertragen, wobei der zuvor gefüllte sendeseitige Speicher (Ds) sich leert und der empfangsseitige Speicher (DE) sich füllt.

Im nächsten Messintervall ist die Digitalsignalübertragung zwischen sendeseitigem Speicher (Ds) und empfangsseitigem Speicher (DE) wieder unterbrochen, wobei der geleerte sendeseitige Speicher (Ds) sich wieder füllt und der gefüllte empfangsseitige Speicher (DE) sich wieder leert.

Es können so die B-B-D-Bytes der aufeinanderfolgenden Basisrahmen (vgl. FIG 3) sendeseitig fortlaufend in die vergrösserten Übertragungs-Pulsrahmen gestopft werden, indem die ersten 18 Informations-Bits des zweiten Basisrahmens als die letzten 18 zusätzlichen Informations-Bits des ersten Basisrahmens übertragen werden usw., was dann empfangsseitig wieder rückgängig gemacht wird.

Die eigentliche Messung von Übertragungsparametern der Teilnehmeranschlussleitung TlnAl (in FIG 1) kann z.B. eine Messung der Bitfehlerrate (Bit Error Rate BER) sein, die indessen ebenso wie eine Änderung von n im laufenden Betrieb nicht mehr Gegenstand der vorliegenden Erfindung ist und daher hier nicht näher erläutert werden muss.

Bei leichter Erhöhung der Übertragungsbitrate und leichter Vergrösserung des sendeseitigen und des empfangsseitigen Speichers kann die Bitrate, mit der das übertragene Digitalsignal aus dem empfangsseitigen Speicher ausgelesen wird, auch leicht asynchron zu der Bitrate sein, mit der das zu übertragende Digitalsignal in den sendeseitigen Speicher eingelesen wird. Der empfangsseitige Auslesetakt kann dabei aus einem mitübertragenen Hilfs-Pilotsignal, z.B. der Superrahmenfrequenz von 666,6 Hz entsprechend der Superrahmendauer von 1,5 ms, gewonnen werden, der dem übertragenen Signal mit geringer Amplitude überlagert sein kann.

In dem im Vorstehenden erläuterten Ausführungsbeispiel wiederholen sich die Messintervalle mit einer Periode, die gleich dem um eine Messintervall-Länge erhöhten Quotienten aus der Länge der während eines Messintervalls auftretenden Digitalsignal-Bytes und der Länge der in einem Digitalsignal-Pulsrahmen reservierten Bytefelder ist. Dabei ist es abweichend von dem erläuterten Ausführungsbeispiel auch möglich, bei einem anders, beispielsweise in Form eines (aus Bocker: ISDN - Das diensteintegrierende digitale Nachrichtennetz, 2. Aufl. 1987, Bild 4.10, bekannten) $250\mu$s-Doppelrahmens strukturierten Basisrahmen ein Messintervall in einer Länge von im Beispiel lediglich einem Doppelrahmen vorzusehen, wobei dann auch der sendeseitige und der empfangsseitige Durchlaufspeicher von dieser Länge ist.

Des weiteren sind bei dem im Vorstehenden erläuterten Ausführungsbeispiel in den Digitalsignal-Pulsrahmen die reservierten Bytefelder zur Übertragung zwischengespeicherter Digitalsignal-Bytes in der Weise vorgesehen, dass die Bytefelder in den Digitalsignal-Pulsrahmen bei unveränderter Pulsrahmendauer jeweils um die reservierten Bytefelder vermehrt sind. Alternativ ist es aber auch möglich, dass im Basisrahmen (vgl. FIG 2) bei unverändertem Umfang seines Informationsfelds in diesem von vornherein z.B. zwei B-Bytefelder und ein D-Bytefeld, d.h. $2\times8 + 2 = 18$ bit, reserviert sind.

Es ist es auch möglich, dass in die Folge der Digitalsignal-Pulsrahmen wiederholt ein Messintervall zur Messung der Übertragungsparameter in der Weise eingeblendet ist, dass in jedem Superrahmen ein Teil des Zeitraums der - bei n > 2 ohnehin nicht in ihrer vollen Anzahl benötigten - OAM-Bits für die Messung reserviert ist, wobei die - in diesem Zeitraum ohnehin nicht auftretenden - Digitalsignal-Bytes ausserhalb dieses Zeitraums übertragen werden. Dies muss hier indessen nicht weiter erläuert werden, da dies zum weiteren Verständnis der Erfindung nicht mehr erforderlich ist.

**Patentansprüche**

1. Übertragungssystem zur Übertragung von $n\times64$-kb/s-Digitalsignalen mit an die Leitungseigenschaften adaptiv anpassbarem n (mit $2 \leq n \leq 30$) über eine Teilnehmeranschlußleitung nach Maßgabe von Messungen von Übertragungsparametern der Teilnehmeranschlußleitung,
   **dadurch gekennzeichnet,**
   **dass** Mittel vorgesehen sind, die in die Folge der Digitalsignal-Pulsrahmen wiederholt ein Messintervall zur Messung der Übertragungsparameter einblenden und die in diesem Zeitraum an sich zu übertragenden Digitalsignal-Bytes zwischengespeichern und in einem Stopfverfahren ausserhalb dieses Zeitraums übertragen.

2. Übertragungssystem nach Anspruch 1,
   **dadurch gekennzeichnet,**
   **dass** in den Digitalsignal-Pulsrahmen jeweils wenigstens ein reserviertes Bytefeld zur Übertragung zwischengespeicherter Digitalsignal-Bytes vorgesehen ist.

3. Übertragungssystem nach Anspruch 2,
   **dadurch gekennzeichnet,**
   **dass** die Anzahl der Bytefelder im Digitalsignal-Pulsrahmen bei unveränderter Pulsrahmendauer jeweils um die Anzahl der reservierten Bytefelder vergrössert ist.

4. Übertragungssystem nach Anspruch 1, 2 oder 3,
   **dadurch gekennzeichnet,**
   **dass** in den einem Messintervall vorangehenden Pulsrahmen das Digitalsignal zwischen einem sendeseitigen, vom zu übertragenden Digitalsignal durchlaufenen Speicher mit einer dem Messintervall entsprechenden Speicherkapazität, in den das zu übertragende Digitalsignal mit seiner Nenn-Bitrate entsprechend $n\times64$ kb/s eingelesen wird, und einem empfangsseitigen, vom übertragenen Digitalsignal durchlaufenen Speicher mit einer dem Messintervall entsprechenden Speicherkapazität, aus dem das übertragene Digitalsignal mit seiner Nenn-Bitrate entsprechend $n\times64$ kb/s ausgelesen wird, mit demgegenüber erhöhter Übertragungsbitrate übertragen wird, wobei der zuvor gefüllte sendeseitige Speicher sich leert und der zuvor geleerte empfangsseitige Speicher sich füllt,
und **dass** im Messintervall die Digitalsignalübertragung zwischen sendeseitigem Speicher und empfangsseitigen Speicher unterbrochen ist, wobei der geleerte sendeseitige Speicher sich wieder füllt und der gefüllte empfangsseitige Speicher sich wieder leert.

5. Übertragungssystem nach Anspruch 2 und einem der Ansprüche 1, 3 oder 4,
**dadurch gekennzeichnet,**
**dass** die Messintervalle sich mit einer Periode wiederholen, die gleich dem um eine Messintervall-Länge erhöhten Quotienten aus der Länge der während eines Messintervalls auftretenden Digitalsignal-Bytes und der Länge der in einem Digitalsignal-Pulsrahmen reservierten Bytefelder ist.

6. Übertragungssystem nach einem der Ansprüche 2 bis 5,
**dadurch gekennzeichnet,**
**dass** als Messintervall ein ISDN-Multirahmen und als reservierte Bytefelder 2 B- und 1 D-Bytefeld vorgesehen sind.

**Claims**

1. Transmission system for the transmission of nx64-kb/s digital signals with n (where $2 \leq n \leq 30$) adaptable to line properties over a subscriber line according to measurements of transmission parameters of the subscriber line,
**characterised in that**
means are provided which repeatedly superimpose a measurement interval for measuring the transmission parameters into the sequence of digital signal pulse frames, and buffer the digital signal bytes to be transmitted per se in this period of time and transmit said digital signal bytes in a justification method outside said period of time.

2. Transmission system according to claim 1,
**characterised in that**
at least one reserved byte field is provided in each instance in the digital signal pulse frames for the transmission of buffered digital signal bytes.

3. Transmission system according to claim 2,
**characterised in that**
in the event of an unchanged pulse frame duration, the number of byte fields in the digital signal pulse frame is increased in each instance by the number of reserved byte fields.

4. Transmission system according to claim 1, 2 or 3,
**characterised in that**
in the pulse frames preceding a measurement interval, the digital signal is transmitted between a send-side storage device, through which a digital signal to be transmitted passes, with a storage capacity corresponding to the measurement interval, into which the digital signal to be transmitted with its nominal bit rate corresponding to nx64 kb/s is read and a receive-side storage device, through which the transmitted digital signal passes, with a storage capacity corresponding to the measurement interval, from which the transmitted digital signal with its nominal bit rate corresponding to nx64 kb/s is read out,
at a comparatively high transmission bit rate, with the previously filled send-side storage device emptying and the previously emptied receive-side storage device filling,
and that in the measurement interval the digital signal transmission between the send-side storage device and receive-side storage device is interrupted, with the emptied send-side storage device refilling and the filled receive-side storage device re-emptying.

5. Transmission system according to claim 2 and one of claims 1, 3 and 4,
**characterised in that**
the measurement intervals are repeated at a period, which is identical to the quotient, plus a measurement interval length, of the length of the digital signal bytes occurring during a measurement interval and the length of the byte fields reserved in a digital signal pulse frame.

6. Transmission system according to one of claims 2 to 5,
**characterised in that**
an ISDN multiframe is provided as a measurement interval and 2 B and 1 D byte fields are provided as reserved byte fields.

## Revendications

1. Système de transmission pour la transmission de signaux numériques n×64-kb/s avec n adaptable de façon adaptative aux propriétés de ligne (avec $2 \leq n \leq 30$) par une ligne d'abonné selon des mesures de paramètres de transmission de la ligne d'abonné, **caractérisé en ce que** des moyens sont prévus, lesquels intègrent dans la séquence des trames d'impulsion du signal numérique de façon répétée un intervalle de mesure pour la mesure des paramètres de transmission, et qui stockent provisoirement les octets de signal numérique à transmettre en soi pendant cette période et les transmettent dans une procédure de remplissage à l'extérieur de cette période.

2. Système de transmission selon la revendication 1, **caractérisé en ce que** dans la trame d'impulsion de signal numérique est prévue au moins une zone d'octets réservée pour la transmission d'octets de signal numérique stockés provisoirement.

3. Système de transmission selon la revendication 2, **caractérisé en ce que** le nombre des zones d'octets dans la trame d'impulsion de signal numérique est augmenté à chaque fois du nombre des zones d'octets réservées si la trame d'impulsion n'est pas modifiée.

4. Système de transmission selon la revendication 1, 2 ou 3, **caractérisé en ce que** dans les trames d'impulsion précédant l'intervalle de mesure, le signal numérique est transmis entre une mémoire côté émission, parcourue par le signal numérique à transmettre, ayant une capacité de stockage correspondant à l'intervalle de mesure, dans laquelle le signal numérique à transmettre est entré avec son taux binaire nominal conformément à n×64 kb/s, et une mémoire côté émission, traversée par un signal numérique transmis, ayant une capacité de stockage correspondant à l'intervalle de mesure, à partir de laquelle le signal numérique est transmis avec son taux binaire nominal conformément à n×64 kb/s, avec un taux binaire de transmission élevé par rapport à cela, la mémoire côté émission remplie auparavant se vidant et la mémoire côté réception vidée auparavant se remplissant, et **en ce que**, dans l'intervalle de mesure, la transmission de signal numérique entre la mémoire côté émission et la mémoire côté réception est interrompue, la mémoire côté émission vidée se remplissant à nouveau et la mémoire côté réception remplie se vidant à nouveau.

5. Système de transmission selon la revendication 2 et l'une quelconque des revendications 1, 3 ou 4, **caractérisé en ce que** les intervalles de mesure se répétant avec une période qui est identique au quotient, majoré d'un intervalle de mesure, résultant de la longueur des bytes de signal numérique apparaissant pendant un intervalle de mesure et de la longueur des zones d'octets réservées dans une trame d'impulsion de signal numérique.

6. Système de transmission selon l'une quelconque des revendications 2 à 5, **caractérisé en ce que** une multitrame ISDN est prévue comme intervalle de mesure et une zone d'octets 2 B et une zone d'octets 1 D sont prévues comme zones d'octets réservées.

FIG 1

FIG 2

1,5 ms

FW          INFO          OAM

FIG 3

1,5 ms

FW    INFO        FW    INFO    FW    INFO    FW    INFO
         OAM              OAM            OAM            OAM